# EUROPEAN PATENT SPECIFICATION

(11) **EP 3 193 069 B1**
(45) Date of publication and mention of the grant of the patent: **02.10.2019**
(21) Application number: 15840552.2
(22) Date of filing: 20.03.2015
(51) Int. Cl.: F16L 59/06, F24H 9/00, F16L 59/065

(54) **VACUUM HEAT INSULATING MATERIAL, METHOD FOR MANUFACTURING VACUUM HEAT INSULATING MATERIAL, INSTALLATION STRUCTURE FOR VACUUM INSULATING MATERIAL, AND HOT-WATER STORAGE TANK WITH VACUUM HEAT INSULATING MATERIAL**
VAKUUMWÄRMEISOLATIONSMATERIAL, VERFAHREN ZUR HERSTELLUNG DES VAKUUMWÄRMEISOLATIONSMATERIAL, INSTALLATIONSSTRUKTUR FÜR VAKUUMISOLATIONSMATERIAL UND HEISSWASSERAUFBEWAHRUNGSTANK MIT VAKUUMWÄRMEISOLATIONSMATERIAL
MATÉRIAU D'ISOLATION THERMIQUE SOUS VIDE, PROCÉDÉ DE FABRICATION DE MATÉRIAU D'ISOLATION THERMIQUE SOUS VIDE, STRUCTURE D'INSTALLATION POUR UN MATÉRIAU D'ISOLATION THERMIQUE SOUS VIDE, ET CUVE DE STOCKAGE D'EAU CHAUDE DOTÉE DU MATÉRIAU D'ISOLATION THERMIQUE SOUS VIDE

(30) Priority: 09.09.2014 JP 2014183569
(43) Date of publication of application: 19.07.2017
(73) Proprietor: Mitsubishi Electric Corporation, Chiyoda-ku Tokyo 100-8310 (JP)
(72) Inventor: YAJI, Yoshikazu, Tokyo 100-8310 (JP); SHINOKI, Toshio, Tokyo 100-8310 (JP); SUZUKI, Shunkei, Tokyo 100-8310 (JP)
(74) Representative: Sajda, Wolf E.
(86) International application number: PCT/JP2015/058614
(87) International publication number: WO 2016/038911

(56) References cited:
- EP-A2- 2 764 999
- JP-A- 2004 011 861
- JP-A- 2004 011 861
- JP-A- 2006 118 639
- JP-A- 2006 161 939
- US-A1- 2008 095 970

## Description

### Technical Field

The present invention relates to a vacuum thermal insulation material having a penetrating hole, a method for manufacturing the vacuum thermal insulation material, an installation configuration of the vacuum thermal insulation material, and a hot water storage tank provided with the vacuum thermal insulation material.

### Background Art

A vacuum thermal insulation material is structured by vacuum-sealing a core material formed with a fibrous member, while using, for example, an aluminum lamination sheet as an exterior cover. The vacuum thermal insulation material manufactured in this manner is primarily used as being installed in a desired location (having a flat plane or a curved plane) of a product to be thermally insulated.

There are some situations where interfering objects such as pipes and wirings are provided in an installation area of the vacuum thermal insulation material, and the user wishes to have the interfering objects extend through the vacuum thermal insulation material. However, after being manufactured, the vacuum thermal insulation material allows no processing that involves a change in the planar shape thereof (e.g., making a hole or making a cut-out section). For this reason, it has conventionally been proposed to configure a vacuum thermal insulation material to have, in advance, penetrating holes formed therein that allow the interfering objects described above to extend therethrough.

Further, for the purpose of preventing the quality in the surrounding part of a penetrating hole from being deteriorated, another vacuum thermal insulation material has also conventionally been proposed in which a tapering process at an angle in the range from 20° to 45° inclusive with respect to the plane of the vacuum thermal insulation material is applied to a ridgeline part of the penetrating hole (see Patent Literature 1, for example).

### List of Citations

### Patent Literature

Patent Literature 1: Japanese Unexamined Patent Application Publication
JP 2004-011 861 A (Abstract, FIG. 1)

### Summary of Invention

### Technical Problem

By applying the tapering process to the inner circumferential wall of the penetrating hole formed in the core material, the conventional vacuum thermal insulation material prevents pinholes and cracks from occurring in the surrounding of the penetrating hole formed in the core material, at the time of thermally fusing an exterior cover. However, due to some tension that is caused when the exterior cover is thermally fused, stress occurs in a part of the exterior cover positioned in the surrounding of the penetrating hole formed in the core material.

Further, after the vacuum thermal insulation material is installed with a product, the part of the exterior cover positioned on the high temperature side experiences thermal stress (a heat load) due to the heat applied thereto. For this reason, the conventional vacuum thermal insulation material has a problem where, due to the stress occurring at the time of the thermal fusion and the thermal stress applied thereto during use, pinholes and cracks occur in the part of the exterior cover positioned in the surrounding of the penetrating hole formed in the core material, and thus, the reliability of the vacuum thermal insulation material is reduced.

To solve the problem described above, it is an object of the present invention to provide a vacuum thermal insulation material that makes it possible to prevent the reliability in the surrounding part of the penetrating hole from being reduced, a method for manufacturing the vacuum thermal insulation material, an installation configuration of the vacuum thermal insulation material, and a hot water storage tank provided with the vacuum thermal insulation material.

### Solution to the Problem

A vacuum thermal insulation material of an embodiment of the present invention comprises a core material formed with a fibrous member and having a core material penetrating hole formed therein, and an exterior cover having an exterior cover penetrating hole formed therein in a position corresponding to the core material penetrating hole, the exterior cover covering and hermetically sealing the core material in a vacuum and a part of the exterior cover positioned at an outer perimeter part of the core material and an inner circumferential side of the core material penetrating hole being thermally fused, the core material penetrating hole having a first tapered section formed on a side of one surface of the core material and a second tapered section formed on a side of another surface of the core material, the first tapered section and the second tapered section being provided with an intersection part therebetween, the intersection part being positioned on the other surface side relative to a center part with respect to a thickness of the core material, α > β being satisfied where α represents an angle formed between the first tapered section and an imaginary plane extended along the one surface from an outer circumferential part of the core material penetrating hole toward a center thereof, whereas β represents an angle formed between the second tapered section and an imaginary plane extended along the other surface from the outer circumferential part of the core material penetrating hole toward the center thereof.

Further, a method for manufacturing a vacuum thermal insulation material of an embodiment of the present invention is configured so that the vacuum thermal insulation material comprises the plurality of fiber sheets formed of the fibrous member, a plurality of fiber sheets each having the penetrating hole formed in the position corresponding to the core material penetrating hole, the method comprising forming the core material by stacking the fiber sheets in a manner that sizes of the penetrating holes decrease from the one surface side and the other surface side toward the intersection part between the first tapered section and the second tapered section.

Further, an installation configuration comprising a vacuum thermal insulation material of an embodiment of the present invention is configured so that the vacuum thermal insulation material of an embodiment of the present invention is arranged in a manner that the other surface side is a side having a higher temperature than the one surface side.

Furthermore, a hot water storage tank of an embodiment of the present invention comprises a vacuum thermal insulation material of an embodiment of the present invention, a tank storing heated water therein; and a pipe connected to the tank, the vacuum thermal insulation material being arranged in a manner that the pipe penetrates through the exterior cover penetrating hole and that the other surface faces the tank. Advantageous Effects of Invention

The vacuum thermal insulation material of an embodiment of the present invention is configured so that, as for the stress occurring in the part of the exterior cover positioned in the surrounding of the penetrating hole formed in the core material at the time of thermally fusing the exterior cover, the magnitude of the stress occurring in the part of the exterior cover positioned on the second tapered section side (the part of the exterior cover positioned on the other surface side) is smaller than the magnitude of the stress occurring in the part of the exterior cover positioned on the first tapered section (the part of the exterior cover positioned on the one surface side).

Accordingly, even when thermal stress is applied during use of the vacuum thermal insulation material, the part of the exterior cover positioned on the second tapered section side (the part of the exterior cover positioned on the other surface side) is less likely to have the occurrence of pinholes and cracks in the surrounding of the penetrating hole formed in the core material than the part of the exterior cover positioned on the first tapered section side (the part of the exterior cover positioned on the one surface side).

In other words, the part of the exterior cover positioned on the second tapered section side (the part of the exterior cover positioned on the other surface side) has a higher level of resistance to the thermal stress applied during use of the vacuum thermal insulation material than the part of the exterior cover positioned on the first tapered section side (the part of the exterior cover positioned on the one surface side).

Consequently, by arranging the vacuum thermal insulation material of an embodiment of the present invention in a manner that the part of the exterior cover positioned on the second tapered section side (the part of the exterior cover positioned on the other surface side) faces the high temperature side, it is possible to prevent pinholes and cracks from occurring in the part of the exterior cover positioned in the surrounding of the penetrating hole formed in the core material. It is therefore possible to prevent the reliability in the surrounding part of the penetrating hole from being reduced.

### Brief Description of the Drawings

- FIG. 1: is a front view illustrating a vacuum thermal insulation material according to Embodiment 1 of the present invention.
- FIG. 2: is a cross-sectional view taken along the line A-A in FIG. 1.
- FIG. 3: is a cross-sectional view for explaining an installation configuration of the vacuum thermal insulation material according to Embodiment 1 of the present invention.
- FIG. 4: is a chart indicating, with respect to taper angles, the number of pinholes occurring in the vacuum thermal insulation material according to Embodiment 1 of the present invention.
- FIG. 5: is a cross-sectional view for explaining a core material of a vacuum thermal insulation material according to Embodiment 2 of the present invention.
- FIG. 6: is a cross-sectional view for explaining a vacuum thermal insulation material according to Embodiment 3 of the present invention.
- FIG. 7: is a longitudinal cross-sectional view illustrating a hot water storage tank according to Embodiment 4 of the present invention.
- FIG. 8: is an enlarged view of part Q in FIG. 7.
- FIG. 9: is a longitudinal cross-sectional view illustrating a hot water storage tank according to Embodiment 5 of the present invention.
- FIG. 10: is an enlarged view of part Q in FIG. 9.

### Description of Embodiments

### Embodiment 1

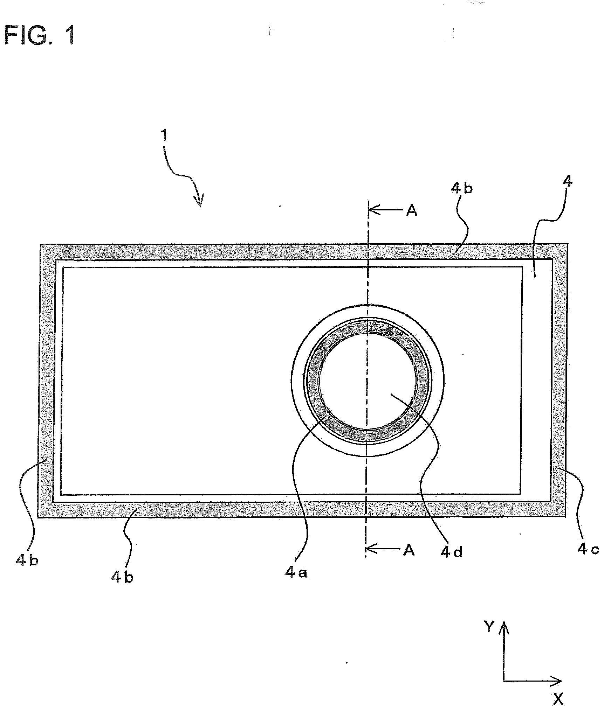

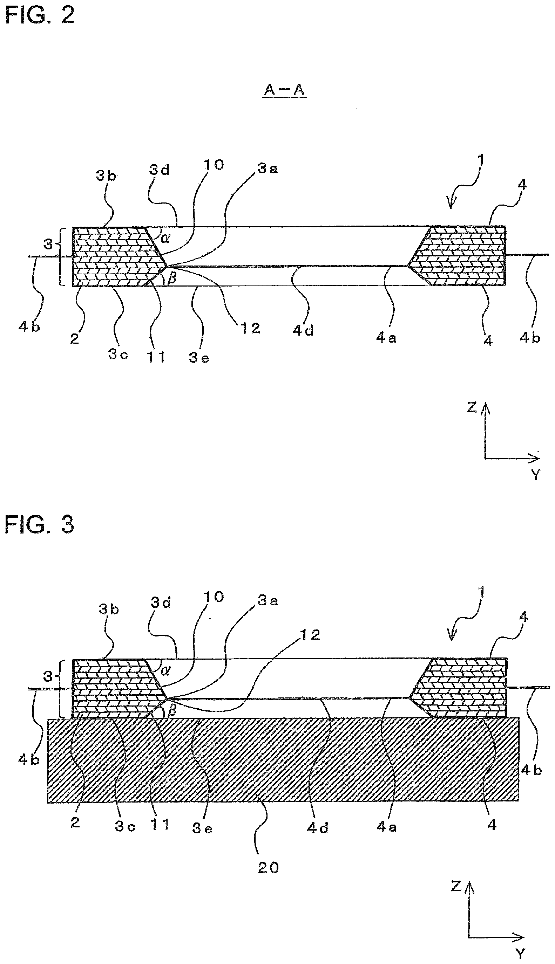

FIG. 1 is a front view illustrating a vacuum thermal insulation material according to Embodiment 1 of the present invention. FIG. 2 is a cross-sectional view taken along the line A-A in FIG. 1.

A vacuum thermal insulation material 1 according to Embodiment 1 will be explained below, with reference to Figs. 1 and 2. Further, in the following sections, an XYZ coordinate system will be used in the explanation to facilitate the explanation of the vacuum thermal insulation material 1. The short-side direction of the vacuum thermal insulation material 1 illustrated in FIG. 1 corresponds to the Y-axis, while the upper side as the vacuum thermal insulation material 1 is viewed will be referred to as a +Y direction, whereas the lower side of the view will be referred to as a -Y direction.

Further, the long-side direction of the vacuum thermal insulation material 1 illustrated in FIG. 1 corresponds to the X-axis, while the right side as the vacuum thermal insulation material 1 is viewed will be referred to as a +X direction, whereas the left side of the view will be referred to as a -X direction. Also, the upper side as the vacuum thermal insulation material 1 illustrated in FIG. 2 is viewed will be referred to as a +Z direction, whereas the lower side of the view will be referred to as a -Z direction.

The vacuum thermal insulation material 1 according to Embodiment 1 comprises a core material 3 and an exterior cover 4 of which an outer perimeter part is thermally fused and that covers and hermetically seals the core material 3 in a vacuum. Further, the vacuum thermal insulation material 1 according to Embodiment 1 has a penetrating hole (an exterior cover penetrating hole 4d described later) formed therein to allow interfering objects (e.g., a pipe, a wiring, and a circuit terminal) provided in an installation area of the vacuum thermal insulation material 1 to extend therethrough.

The core material 3 is formed by using, for example, a fibrous member such as glass wool and polyethylene terephthalate (PET) or other materials, to have a substantially rectangular shape in a front view, for example. In Embodiment 1, for example, the core material 3 is structured by stacking a plurality of (ten in FIG. 2) fiber sheets 2 each of which is formed as a sheet-like member of approximately 2 mm, for example. The fiber sheets 2 are obtained by, for example, shaping fiber members of which the fiber diameter is in the range of approximately 3 µm to 5 µm into the form of sheets.

The core material 3 has at least one core material penetrating hole 3a formed therein that has a circular shape, for example, in a front view. In Embodiment 1, the diameter of the core material penetrating hole 3a is approximately 100 mm.

Further, the core material 3 according to Embodiment 1 is configured so that, as illustrated in FIG. 2, the core material penetrating hole 3a has a first tapered section 10 formed on the first surface 3b side of the core material 3 (on the side of the surface of the core material 3 positioned on the +Z side) and has a second tapered section 11 formed on the second surface 3c side of the core material 3 (on the side of the surface of the core material 3 positioned on the -Z side). Further, an intersection part 12 between the first tapered section 10 and the second tapered section 11 is positioned on the second surface 3c side relative to a center part, in terms of the thickness direction of the core material 3.

Further, the core material 3 according to Embodiment 1 is configured so that α > β is satisfied where α (degrees) represents the angle formed by the first tapered section 10 and an imaginary plane 3d extended along the first surface 3b from an outer circumferential part of the core material penetrating hole 3a toward the center thereof, whereas β (degrees) represents the angle formed by the second tapered section 11 and an imaginary plane 3e extended along the second surface 3c from the outer circumferential part of the core material penetrating hole 3a toward the center thereof. In Embodiment 1, the angles are formed to satisfy 45° < α < 90° and 0° < β < 20°.

The exterior cover 4 is a laminate film structured by overlaying resin on the front and the rear surfaces of a metal foil. In Embodiment 1, an aluminum foil is used as the metal foil of the exterior cover 4. Further, on the front surface of the aluminum foil, nylon, PET, or another material is laminated. On the rear surface of the aluminum foil, a thermoplastic resin (e.g., polyethylene [PE]) having a lower softening temperature than that of the resin material used on the front surface is laminated.

The two sheets structuring the exterior cover 4 each cover the core material 3 while the rear surfaces thereof are facing each other and hermetically seals the core material 3 in a vacuum, the outer perimeter part (lateral edge parts 4b and 4c) of the core material 3 and the inner circumferential side (a thermal fusion part 4a) of the core material penetrating hole 3a are thermally fused. Further, the sheets structuring the exterior cover 4 have the exterior cover penetrating hole 4d formed therein in a position corresponding to the core material penetrating hole 3a.

Next, an example of a method for manufacturing the vacuum thermal insulation material 1 will be explained.

First, the core material 3 is manufactured by forming, for example, a fibrous member such as glass wool and polyethylene terephthalate (PET) or other materials, to have a substantially rectangular shape in a front view, for example. After that, the core material penetrating hole 3a is formed in the core material 3. Also, at the same time as forming the core material penetrating hole 3a or after forming the core material penetrating hole 3a, the first tapered section 10 and the second tapered section 11 are formed.

Further, the two sheets structuring the exterior cover 4 are laid on top of each other in a manner that the rear surfaces thereof face each other. After that, the lateral edge parts 4b on three sides of the two sheets structuring the exterior cover 4 are thermally fused together. As a result, the two sheets structuring the exterior cover 4 are in the form of a bag where the lateral edge part 4c section is open. The core material 3 having the core material penetrating hole 3a, the first tapered section 10, and the second tapered section 11 formed therewith is inserted into the bag-shaped exterior cover 4 through the lateral edge part 4c section (an opening part).

After that, the air in the bag-shaped exterior cover 4 is sucked out to realize a vacuum state (where the pressure is lower than the atmospheric pressure), and the lateral edge part 4c is thermally fused. As a result, the core material 3 is hermetically sealed in the vacuum (vacuum-sealed) by the exterior cover 4.

When the core material 3 has hermetically been sealed in the vacuum by the exterior cover 4, the two sheets (the part of the exterior cover 4 positioned on the first surface 3b side and the part of the exterior cover 4 positioned on the second surface 3c side) structuring the exterior cover 4 are in close contact with each other on the inner circumferential side of the core material penetrating hole 3a.

The parts of the exterior cover 4 that are in close contact with each other are thermally fused together in a ring shape, to form the thermal fusion part 4a. In Embodiment 1, the diameter of the thermal fusion part 4a on the outer circumferential side is 80 mm, for example, whereas the diameter thereof on the inner circumferential side is 60 mm, for example.

Next, the state of the part of the exterior cover 4 positioned in the surrounding of the core material penetrating hole 3a after the thermal fusion part 4a is formed will be explained. When the vacuum-sealing process is performed, tension is applied to the part of the exterior cover 4 positioned in the surrounding of the core material penetrating hole 3a. For this reason, after the thermal fusion part 4a is formed, stress is occurring in the part of the exterior cover 4 positioned in the surrounding of the core material penetrating hole 3a.

In that situation, the vacuum thermal insulation material 1 according to Embodiment 1 is configured so that, as described above, the angle β of the second tapered section 11 is smaller than the angle α of the first tapered section 10, while the intersection part 12 between the first tapered section 10 and the second tapered section 11 is positioned on the second surface 3c side relative to the center part in terms of the thickness direction of the core material 3.

Accordingly, it is possible to arrange the stress occurring in the part of the exterior cover 4 covering the second tapered section 11 (the part of the exterior cover 4 positioned on the second surface 3c side) to be smaller than the stress occurring in the part of the exterior cover 4 covering the first tapered section 10 (the part of the exterior cover 4 positioned on the first surface 3b side).

Returning to the description of the method for manufacturing the vacuum thermal insulation material 1, after the ring-shaped thermal fusion part 4a is formed, the exterior cover penetrating hole 4d is formed on the inner circumferential side of the thermal fusion part 4a. By manufacturing the vacuum thermal insulation material 1 in this manner, it is possible to form the exterior cover penetrating hole 4d while keeping the interior of the vacuum thermal insulation material 1 in the vacuum state.

In addition, in Embodiment 1, the exterior cover penetrating hole 4d having the substantially circular shape in a front view is formed to be smaller than the diameter of the thermal fusion part 4a on the inner circumferential side and to be, for example, concentric with the thermal fusion part 4a. More specifically, in Embodiment 1, the diameter of the exterior cover penetrating hole 4d is arranged to be 50 mm.

In Embodiment 1, the thermal fusion part 4a is formed on the inner circumferential side of the core material penetrating hole 3a after the core material 3 is vacuum-sealed by thermally fusing the lateral edge part 4c (the opening part). However, possible methods are not limited to this example. It is acceptable to perform the thermal fusion of the lateral edge part 4c and the formation of the thermal fusion part 4a simultaneously. Further, in Embodiment 1, the exterior cover penetrating hole 4d is formed after the thermal fusion part 4a is formed; however, it is also acceptable to perform the formation of the thermal fusion part 4a and the formation of the exterior cover penetrating hole 4d simultaneously.

Next, an installation configuration comprising the vacuum thermal insulation material 1 for a thermally insulated object 20 will be explained. In the following sections, an example in which the thermally insulated object 20 has a high temperature will be explained.

FIG. 3 is a cross-sectional view for explaining an installation configuration of the vacuum thermal insulation material according to Embodiment 1 of the present invention.

The thermally insulated object 20 is, for example, in the shape of a flat plate and comprises a pipe (not illustrated). In that situation, the vacuum thermal insulation material 1 provided to thermally insulate the thermally insulated object 20 is installed in a manner that the part of the exterior cover 4 positioned on the second surface 3c side (i.e., the second tapered section 11 side) faces the thermally insulated object 20, which is a heat source. In this situation, the vacuum thermal insulation material 1 and the thermally insulated object 20 do not necessarily have to be in contact with each other. The vacuum thermal insulation material 1 and the thermally insulated object 20 may be positioned apart from each other.

Further, the pipe provided on the thermally insulated object 20 is arranged to extend through the exterior cover penetrating hole 4d formed in the vacuum thermal insulation material 1. In this situation, the pipe provided on the thermally insulated object 20 is assumed to be smaller (e.g., having a diameter of 40 mm) than the inside diameter of the exterior cover penetrating hole 4d. Thus, the pipe penetrates through the exterior cover penetrating hole 4d formed in the vacuum thermal insulation material 1, and the pipe does not hinder the positioning of the vacuum thermal insulation material 1.

In this situation, when heat is applied from the thermally insulated object 20 to the exterior cover 4 of the vacuum thermal insulation material 1, it means that thermal stress (a heat load) is also applied to the exterior cover 4. In particular, the thermal stress (the heat load) applied to the part of the exterior cover 4 positioned on the high temperature side (the thermally insulated object 20 side) (i.e., the part of the exterior cover 4 positioned on the second tapered section 11 side) is larger than the thermal stress (the heat load) applied to the part of the exterior cover 4 positioned on the opposite side (i.e., the part of the exterior cover 4 positioned on the first tapered section 10 side).

Accordingly, there is concern that the reliability of the vacuum thermal insulation material 1 may be reduced by the occurrence of pinholes and cracks in the part of the exterior cover 4 positioned in the surrounding of the core material penetrating hole 3a, due to the stress occurring at the time of the thermal fusion and the thermal stress applied during use.

However, as described above, the vacuum thermal insulation material 1 according to Embodiment 1 is able to arrange the stress occurring at the time of the thermal fusion in the part of the exterior cover 4 covering the second tapered section 11 (the part of the exterior cover 4 positioned on the second surface 3c side) to be smaller than the stress occurring at the time of the thermal fusion in the part of the exterior cover 4 covering the first tapered section 10 (the part of the exterior cover 4 positioned on the first surface 3b side).

Consequently, the vacuum thermal insulation material 1 according to Embodiment 1 is able to prevent pinholes and cracks from occurring in the part of the exterior cover 4 positioned in the surrounding of the core material penetrating hole 3a. It is therefore possible to prevent the reliability in the surrounding part of the core material penetrating hole 3a from being reduced.

As explained above, in the vacuum thermal insulation material 1 according to Embodiment 1, as for the stress occurring in the part of the exterior cover 4 positioned in the surrounding of the core material penetrating hole 3a at the time of thermally fusing the exterior cover 4, the stress occurring in the part of the exterior cover 4 positioned on the second tapered section 11 side (the part of the exterior cover 4 positioned on the second surface 3c side) is smaller than the stress occurring in the part of the exterior cover 4 positioned on the first tapered section 10 side (the part of the exterior cover 4 positioned on the first surface 3b side).

Accordingly, even when thermal stress is applied during use of the vacuum thermal insulation material 1, the part of the exterior cover 4 positioned on the second tapered section 11 side (the part of the exterior cover 4 positioned on the second surface 3c side) is less likely to have the occurrence of pinholes and cracks in the surrounding of the core material penetrating hole 3a than the part of the exterior cover 4 positioned on the first tapered section 10 side (the part of the exterior cover 4 positioned on the first surface 3b side).

In other words, the part of the exterior cover 4 positioned on the second tapered section 11 side (the part of the exterior cover 4 positioned on the second surface 3c side) has a higher level of resistance to the thermal stress applied during use of the vacuum thermal insulation material 1 than the part of the exterior cover 4 positioned on the first tapered section 10 side (the part of the exterior cover 4 positioned on the first surface 3b side).

Consequently, by arranging the vacuum thermal insulation material 1 according to Embodiment 1 in a manner that the part of the exterior cover 4 positioned on the second tapered section 11 side (the part of the exterior cover 4 positioned on the second surface 3c side) faces the high temperature side, it is possible to prevent pinholes and cracks from occurring in the part of the exterior cover 4 positioned in the surrounding of the core material penetrating hole 3a. It is therefore possible to prevent the reliability in the surrounding part of the core material penetrating hole 3a from being reduced.

If a focus were placed only on reducing the stress occurring in the part of the exterior cover 4 positioned on the second tapered section 11 side at the time of the thermal fusion, it might seem sufficient to just arrange the thermal fusion part 4a of the exterior cover 4 to abut against the thermally insulated object 20 side, without having to form the second tapered section 11.

However, when the vacuum thermal insulation material 1 was manufactured by forming only the first tapered section 10 without forming the second tapered section 11, the area of a thin section (the section where the thickness of the core material 3 is smaller than in the other sections; the section where the first tapered section 10 is formed) would be larger, and the thermal insulation capability of the vacuum thermal insulation material 1 would be lower.

In contrast, the vacuum thermal insulation material 1 according to Embodiment 1 has the second tapered section 11 formed therewith, therefore it is possible to keep the area of the thin section smaller than in the situation where the vacuum thermal insulation material 1 is manufactured without forming the second tapered section 11. In other words, the vacuum thermal insulation material 1 according to Embodiment 1 is also able to prevent the reliability in the surrounding part of the core material penetrating hole 3a from being reduced, while preventing the thermal insulation capability from being lowered.

As a result of forming the second tapered section 11, the end of the exterior cover penetrating hole 4d formed in the exterior cover 4 is positioned so as not to abut against the thermally insulated object 20, which is a heat source. In this regard also, the vacuum thermal insulation material 1 according to Embodiment 1 prevents the thermal insulation capability from being lowered. More specifically, the metal foil of the exterior cover 4 is provided to block the gas from entering the inside of the vacuum thermal insulation material 1 from the outside.

Accordingly, in the manufactured vacuum thermal insulation material 1, the permeability for the gas is high at the thermoplastic resin that is used in the thermal fusion part of the exterior cover 4 and has the low softening temperature, rather than at the surface of the vacuum thermal insulation material 1. Generally speaking, a thermoplastic resin has a higher level of gas permeability at a higher temperature.

Thus, by arranging the thermal fusion part so as not to abut against the high temperature part, it is possible to prevent the gas from entering the inside of the vacuum thermal insulation material 1 from the outside, and it is therefore possible to prevent the thermal insulation capability of the vacuum thermal insulation material 1 from being lowered.

Further, the vacuum thermal insulation material 1 according to Embodiment 1 is configured so that the angle α of the first tapered section 10 satisfies 45° < α < 90°. Thus, in the vacuum thermal insulation material 1 according to Embodiment 1, it is possible to keep the area of the thin section even smaller, therefore it is possible to further prevent the thermal insulation capability from being lowered.

In Embodiment 1, the core material 3 is structured by stacking the ten fiber sheets 2, while the fiber sheets 2 each have a thickness of approximately 2 mm. However, the thickness of the fiber sheets 2 and the number of fiber sheets 2 to be stacked to manufacture the core material 3 are not limited to these examples.

For instance, it is also acceptable to structure the core material 3 by stacking four fiber sheets 2 each having a thickness of 5 mm. In another example, it is also acceptable to structure the core material 3 by using one fiber sheet 2 by preparing the fiber sheet 2 with a thickness of 20 mm. Needless to say, it is also acceptable to form the core material 3 with a thickness of 20 mm or larger, for example.

Further, the dimensions of the core material penetrating hole 3a, the thermal fusion part 4a, and the exterior cover penetrating hole 4d of the exterior cover 4 are not limited to those described above, either. As long as the diameter of the core material penetrating hole 3a is larger than the diameter of the thermal fusion part 4a on the outer circumferential side, and the diameter of the thermal fusion part 4a on the outer circumferential side is larger than the diameter of the exterior cover penetrating hole 4d, it is possible to form the exterior cover penetrating hole 4d while keeping the interior of the vacuum thermal insulation material 1 in the vacuum state.

Accordingly, although the diameter of the core material penetrating hole 3a is arranged to be approximately 100 mm in Embodiment 1, it is possible to change the diameter of the core material penetrating hole 3a, depending on the shape of the surface on which the vacuum thermal insulation material 1 is to be installed and the interfering object.

In the present example, the diameter of the exterior cover penetrating hole 4d is arranged to be 50 mm, and the diameter of the core material penetrating hole 3a is also determined in accordance with the diameter of the exterior cover penetrating hole 4d. For example, in the situation where a penetrating hole is formed to avoid interference with a 30-mm pipe, it is possible to arrange the diameter of the exterior cover penetrating hole 4d to be approximately 40 mm, while arranging the diameter of the core material penetrating hole 3a to be approximately 80 mm.

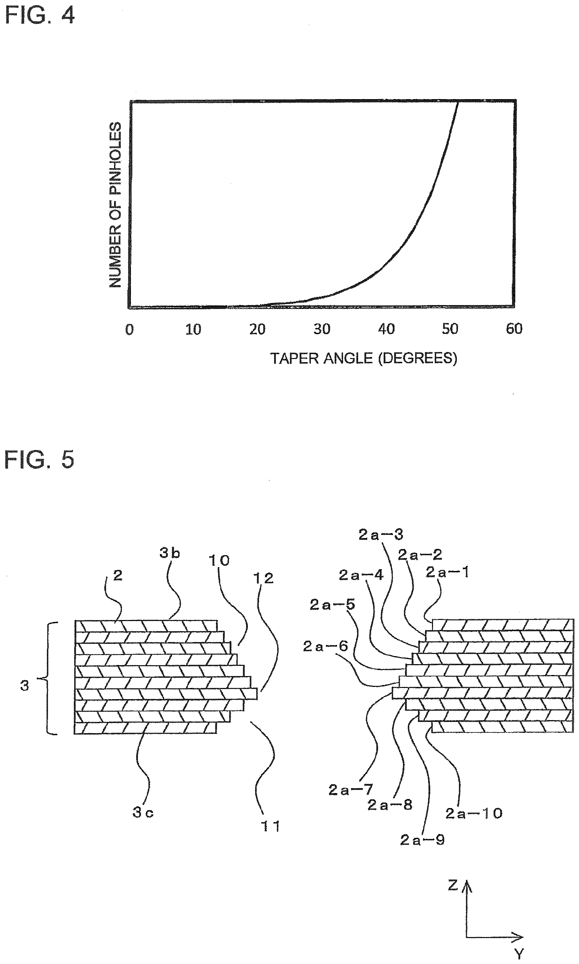

FIG. 4 is a chart indicating, with respect to taper angles, the number of pinholes occurring in the vacuum thermal insulation material according to Embodiment 1 of the present invention.

In the following sections, the angle β (degrees) formed by the imaginary plane 3e and the second tapered section 11 will be explained. For example, pinholes occurring in the second tapered section 11 of the exterior cover 4 when the thermal fusion part 4a is formed will be explained, on the assumption that, for example, the diameter of the core material penetrating hole 3a is approximately 80 mm. The pinholes occurring in the second tapered section 11 each have a very small diameter in the range of a number of micrometers to tens of micrometers, actual counting of the pinholes is not easy.

However, the stress occurring in the second tapered section 11 when the thermal fusion part 4a is formed varies depending on the angle. For example, it was observed that, when the exterior cover 4 was structured with a 0.1-mm resin film, the stress exhibited a value close to a stress tolerance value of the resin at a taper angle of approximately 30°, as a result of an analysis performed while the tensile strength of the resin was taken into consideration.

It is conjectured that the number of pinholes exponentially increases when the taper angle exceeds 30° or larger. Accordingly, it is estimated that the number of pinholes with respect to the taper angle exhibits characteristics illustrated in FIG. 4. Thus, the number of pinholes significantly increases when the angle β (degrees) formed by the imaginary plane 3e and the second tapered section 11 is 40° or larger.

Consequently, it is desirable to arrange the angle β (degrees) to be smaller than 30°. Further, the impact of the thermal stress is taken into consideration, it is desirable to arrange the angle β (degrees) to be smaller than 20° to achieve an even higher level of reliability.

Further, in Embodiment 1, the core material penetrating hole 3a, the thermal fusion part 4a, and the exterior cover penetrating hole 4d are each formed to have a substantially circular shape in a front view; however, the shape of the core material penetrating hole 3a may also arbitrarily be determined. For example, the core material penetrating hole 3a may be formed to have a shape selected from among an oval shape, an oblong circular shape, a polygonal shape, and other shapes.

In Embodiment 1, the core material penetrating hole 3a, the thermal fusion part 4a, and the exterior cover penetrating hole 4d are each formed to have a substantially circular shape, because if the core material penetrating hole 3a had corners, the exterior cover 4 would tend to wrinkle at the corners and would be more prone to tear. For this reason, when the core material penetrating hole 3a is formed to have a polygonal shape, it is desirable to apply a rounding process to the corners so that the core material penetrating hole 3a has no corners.

Further, in Embodiment 1, the vacuum thermal insulation material 1 has only the single exterior cover penetrating hole 4d formed therein to allow the interfering object such as a pipe to extend therethrough; however, possible embodiments are not limited to this example. The number of exterior cover penetrating holes 4d may be determined as appropriate, in accordance with the number of interfering objects provided in the installation area of the vacuum thermal insulation material 1.

### Embodiment 2

The core material 3 formed with the fiber members is soft. For this reason, when the core material penetrating hole 3a, the first tapered section 10, and the second tapered section 11 are formed by shaving the core material 3, the core material 3 could easily be torn. Thus, it might be difficult to form the core material penetrating hole 3a, the first tapered section 10, and the second tapered section 11. However, by manufacturing the core material 3 in the manner described below, it is possible to easily form the core material penetrating hole 3a, the first tapered section 10, and the second tapered section 11. Some elements of the configuration that are not described in Embodiment 2 are the same as those in Embodiment 1. The elements of the configuration that are the same as those in Embodiment 1 will be referred to by using the same reference characters as those in Embodiment 1.

FIG. 5 is a cross-sectional view for explaining a core material of a vacuum thermal insulation material according to Embodiment 2 of the present invention.

The core material 3 according to Embodiment 2 is structured by stacking a plurality of (ten in FIG. 5) fiber sheets 2 each of which is formed as a sheet-like member of approximately 2 mm, for example. The fiber sheets 2 are obtained by, for example, shaping fiber members of which the fiber diameter is in the range of approximately 3 µm to 5 µm into the form of sheets.

Each of the plurality of fiber sheets 2 has a penetrating hole 2a formed therein in a position corresponding to the core material penetrating hole 3a. Further, the penetrating holes 2a formed in at least part of the plurality of fiber sheets 2 are mutually different in size. By using the plurality of fiber sheets 2 formed in this manner, the core material 3 according to Embodiment 2 is formed by stacking the fiber sheets 2 in a manner that the sizes of the penetrating holes 2a decrease, from the first surface 3b side and the second surface 3c side toward the intersection part 12 between the first tapered section 10 and the second tapered section 11.

More specifically, the core material 3 according to Embodiment 2 is configured in the manner described below. In the following explanations, the penetrating holes 2a formed in the fiber sheets 2 will be referred to as penetrating holes 2a-1, 2a-2, 2a-3, 2a-4, 2a-5, 2a-6, 2a-7, 2a-8, 2a-9, and 2a-10 from the first surface 3b side (+Z side) toward the second surface 3c side (-Z side). When the penetrating holes 2a formed in the fiber sheets 2 are defined in this manner, the diameters of the penetrating holes gradually decrease from the penetrating hole 2a-1 toward the penetrating hole 2a-7.

Also, the diameters of the penetrating holes gradually decrease from the penetrating hole 2a-10 toward the penetrating hole 2a-7. Further, the penetrating hole 2a-9 is formed so that the diameter thereof is equal to the diameter of the penetrating hole 2a-3, whereas the penetrating hole 2a-10 is formed so that the diameter thereof is equal to the diameter of the penetrating hole 2a-1.

By stacking the fiber sheets 2 in this manner, the inner circumferential parts of the penetrating holes 2a-1 to 2a-7 form the first tapered section 10, whereas the inner circumferential parts of the penetrating holes 2a-10 to 2a-7 form the second tapered section 11, and also, the inner circumferential part of the penetrating hole 2a-7 forms the intersection part 12.

By configuring the core material 3 as described above in Embodiment 2, even when it is difficult to form the core material penetrating hole 3a, the first tapered section 10, and the second tapered section 11 because the stacked fiber sheets 2 are structured by using the material that can easily be torn, it is possible to easily form the core material penetrating hole 3a, the first tapered section 10, and the second tapered section 11 in the core material 3.

### Embodiment 3

By adding the configuration (tapered parts 10a and 11a) described below to the vacuum thermal insulation material 1 configured as described in Embodiment 1 or Embodiment 2, it is possible to further improve the reliability of the vacuum thermal insulation material 1. Some elements of the configuration that are not described in Embodiment 3 are the same as those in Embodiment 1 or Embodiment 2. The elements of the configuration that are the same as those in the embodiments described above will be referred to by using the same reference characters as those in the embodiments described above.

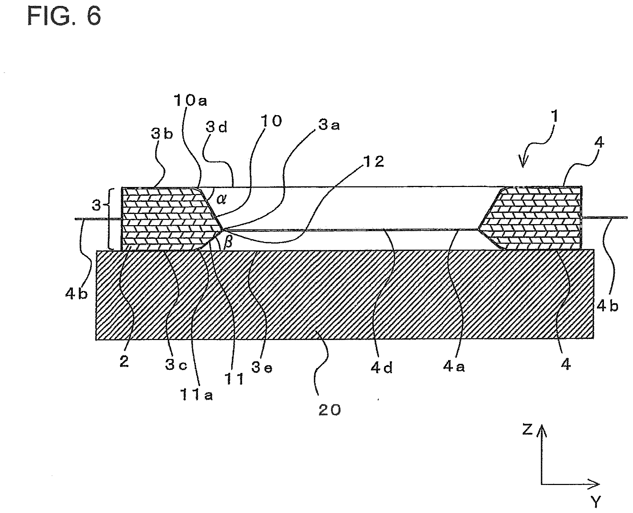

FIG. 6 is a cross-sectional view for explaining a vacuum thermal insulation material according to Embodiment 3 of the present invention.

Similarly to Embodiment 1 and Embodiment 2, the core material 3 according to Embodiment 3 is structured by stacking a plurality of (ten in FIG. 6) fiber sheets 2 each of which is formed as a sheet-like member of approximately 2 mm, for example. The fiber sheets 2 are obtained by, for example, shaping fiber members of which the fiber diameter is in the range of approximately 3 µm to 5 µm into the form of sheets. Further, the core material 3 has at least one core material penetrating hole 3a formed therein and having a circular shape in a front view, similarly to Embodiment 1 and Embodiment 2.

Further, similarly to Embodiment 1 and Embodiment 2, the core material penetrating hole 3a has the first tapered section 10 formed on the first surface 3b side of the core material 3 (on the side of the surface of the core material 3 positioned on the +Z side) and has the second tapered section 11 formed on the second surface 3c side (on the side of the surface of the core material 3 positioned on the -Z side).

Further, the angle β of the second tapered section 11 is smaller than the angle α of the first tapered section 10. Also, the intersection part 12 between the first tapered section 10 and the second tapered section 11 is positioned on the second surface 3c side relative to the center part in terms of the thickness direction of the core material 3.

In this situation, unlike in Embodiment 1 and Embodiment 2, the core material 3 according to Embodiment 3 has been formed with, in an intersection part between the first tapered section 10 and the first surface 3b, a tapered part 10a having an angle smaller than the angle of the first tapered section 10 (as a result of a tapering process performed thereon). Further, the core material 3 has been formed with, in an intersection part between the second tapered section 11 and the second surface 3c, a tapered part 11a having an angle smaller than the angle of the second tapered section 11.

By forming the tapered parts 10a and 11a in this manner, it is possible to suppress the stress occurring in the part of the exterior cover 4 positioned in the surrounding of the core material penetrating hole 3a at the time of the formation of the thermal fusion part 4a. In other words, it is possible to further improve the level of resistance of the vacuum thermal insulation material 1 to thermal stress. It is therefore possible to further improve the reliability of the vacuum thermal insulation material 1.

Another arrangement is also acceptable in which, in place of the tapered part 10a, a rounding process (a process of forming the intersection part to have a curved plane) is applied to the intersection part between the first tapered section 10 and the first surface 3b and in which, in place of the tapered part 11a, a rounding process is applied to the intersection part between the second tapered section 11 and the second surface 3c.

By structuring the core material 3 in this manner, it is also possible to suppress the stress occurring in the part of the exterior cover 4 positioned in the surrounding of the core material penetrating hole 3a at the time of the formation of the thermal fusion part 4a. It is therefore possible to further improve the reliability of the vacuum thermal insulation material 1.

### Embodiment 4

As Embodiment 4, an example of a specific installation configuration of the vacuum thermal insulation material 1 described in any one of Embodiments 1 to 3 (an example of an apparatus provided with the vacuum thermal insulation material 1) will be explained. Some elements of the configuration that are not described in Embodiment 4 are the same as those in any one of Embodiments 1 to 3. The elements of the configuration that are the same as those in the embodiments described above will be referred to by using the same reference characters as those in the embodiments described above.

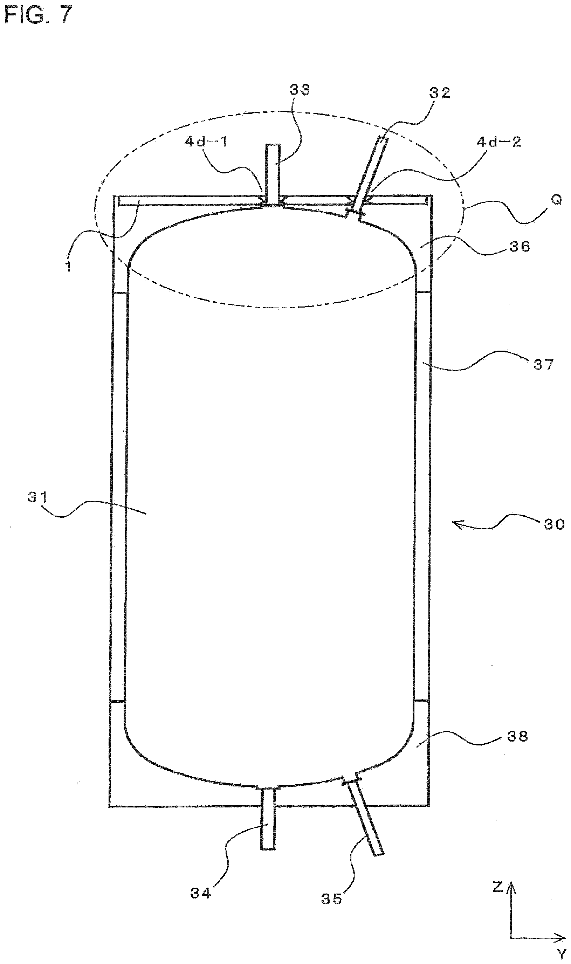

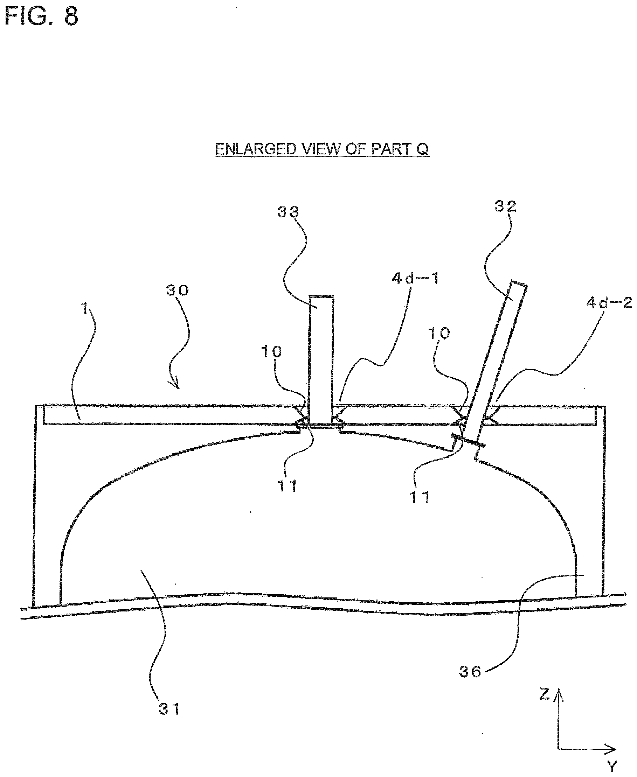

FIG. 7 is a longitudinal cross-sectional view illustrating a hot water storage tank according to Embodiment 4 of the present invention. FIG. 8 is an enlarged view of part Q in FIG. 7.

A hot water storage tank 30 according to Embodiment 4 comprises a tank 31 storing heated water therein; and a thermal insulation material that covers an outer circumferential part of the tank 31 and that thermally insulates the tank 31 from the ambient air. In addition, the tank 31 and the thermal insulation material may further be covered by an exterior case.

The tank 31 is, for example, in the shape of a substantially circular column and has a plurality of pipes connected thereto. More specifically, a top pipe 32 and a hot water supply pipe 33 are connected to an upper part of the tank 31. Further, a bottom pipe 34 and an unheated water supply pipe 35 are connected to a lower part of the tank 31. The top pipe 32 and the bottom pipe 34 are connected to a heating apparatus (e.g., a heat pump unit), which is not illustrated.

The tank 31 structured as described above is configured to store heated water on the inside thereof in the manner described below:

The water stored in the tank 31 is forwarded to the heating apparatus (not illustrated) via the bottom pipe 34 and is heated. The heated water is returned to the upper part of the tank 31 via the top pipe 32. When unheated water (e.g., public water) is to be supplied to the tank 31 from the outside thereof, the unheated water is supplied to the lower part of the tank 31 via the unheated water supply pipe 35. Further, as a result of supplying unheated water to the tank 31, the hot water (the heated water) stored in the tank 31 is pushed up.

Further, as a result of this operation, the hot water is supplied to the outside via the hot water supply pipe 33 connected to the upper part of the tank 31. In this situation, a temperature boundary layer is formed on the inside of the tank 31, because a high temperature part and a low temperature part are formed due to the temperature difference between the hot water and the unheated water. More specifically, the upper part of the tank 31 is the high temperature part.

The outer circumferential part of the tank 31 is covered by the thermal insulation member described below, to thermally insulate the tank 31 from the ambient air.

The surface of the upper part of the tank 31 is covered by a first foamed thermal insulation material 36 shaped by using foamed resin (e.g., foamed polystyrene). The first foamed thermal insulation material 36 has a penetrating hole formed therein through which the top pipe 32 and the hot water supply pipe 33 penetrate, to avoid interference between the first foamed thermal insulation material 36, and the top pipe 32 and the hot water supply pipe 33. Further, a recessed part is formed in a top face part of the first foamed thermal insulation material 36.

Further, in the recessed part, the vacuum thermal insulation material 1 described in any one of Embodiments 1 to 3 is provided. In this situation, the two pipes (the top pipe 32 and the hot water supply pipe 33) are provided in the installation area of the vacuum thermal insulation material 1. For this reason, the vacuum thermal insulation material 1 has two exterior cover penetrating holes 4d (a first exterior cover penetrating hole 4d-1 and a second exterior cover penetrating hole 4d-2) formed therein, to avoid interference between these two pipes and the vacuum thermal insulation material 1. Further, the hot water supply pipe 33 penetrates through the first exterior cover penetrating hole 4d-1, whereas the top pipe 32 penetrates through the second exterior cover penetrating hole 4d-2.

In this situation, the heated water is stored in the tank 31, therefore, when the tank 31 and the ambient air are compared with each other, the tank 31 has a higher temperature. For this reason, the vacuum thermal insulation material 1 is arranged in a manner that the part of the exterior cover 4 positioned on the second tapered section 11 side faces the high temperature side. By using this positioning configuration, it is possible to realize a positioning configuration of the vacuum thermal insulation material 1 having a high level of reliability.

The surface of a lateral part of the tank 31 is covered by a second foamed thermal insulation material 37 shaped by using foamed resin (e.g., foamed polystyrene). Further, the surface of a lower part of the tank 31 is covered by a third foamed thermal insulation material 38 shaped by using formed resin (e.g., foamed polystyrene). The third foamed thermal insulation material 38 has a penetrating hole formed therein through which the bottom pipe 34 and the unheated water supply pipe 35 penetrate, to avoid interference between the third foamed thermal insulation material 38, and the bottom pipe 34 and the unheated water supply pipe 35.

In Embodiment 4, the lateral part and the lower part of the tank 31 are thermally insulated only by the foamed thermal insulation materials; however, needless to say, it is also acceptable to provide vacuum thermal insulation materials for the lateral part and the lower part of the tank 31. In that situation, when there is an interfering object such as a pipe in the installation area of any of the vacuum thermal insulation materials, it is possible to improve the reliability of the vacuum thermal insulation materials by using the vacuum thermal insulation material 1 described in any of Embodiments 1 to 3.

Further, in Embodiment 4, the configuration is described in which the pipes are arranged to penetrate through the exterior cover penetrating holes 4d formed in the vacuum thermal insulation material 1; however, the pipes are merely examples of the interfering objects. For example, when interfering objects such as a wiring and a circuit terminal are present in an installation area of the vacuum thermal insulation material 1, it is possible to avoid the interference between these interfering objects and the vacuum thermal insulation material 1 by arranging these interfering objects to penetrate through the exterior cover penetrating holes 4d. In that situation, by arranging the vacuum thermal insulation material 1 in a manner that the part of the exterior cover 4 positioned on the second tapered section 11 side faces the high temperature side, it is possible to realize a positioning configuration of the vacuum thermal insulation material 1 having a high level of reliability.

### Embodiment 5

As Embodiment 5, an improvement example for the example of the specific installation configuration of the vacuum thermal insulation material 1 described in Embodiment 4 will be explained. Some elements of the configuration that are not described in Embodiment 5 are the same as those in at least one of Embodiments 1 to 4. The elements of the configuration that are the same as those in the embodiments described above will be referred to by using the same reference characters as those in the embodiments described above.

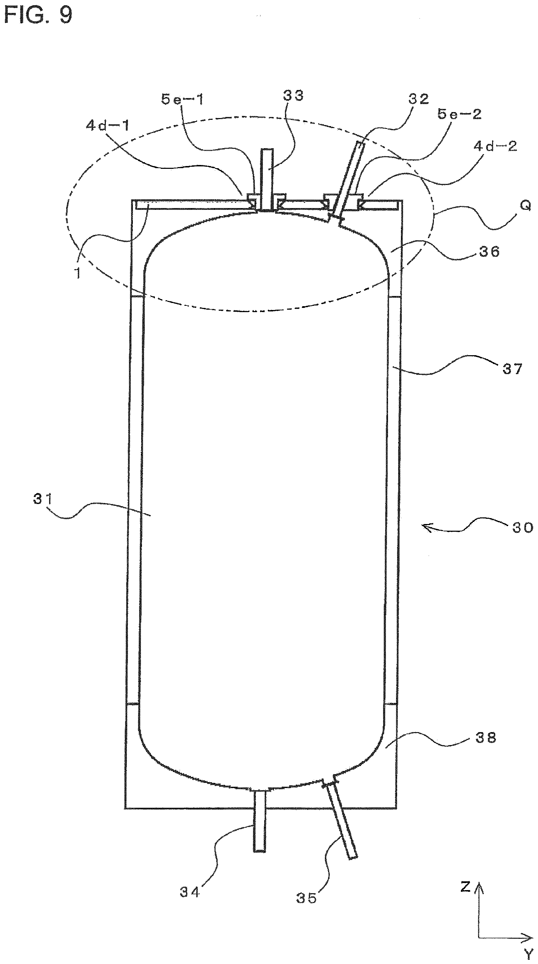

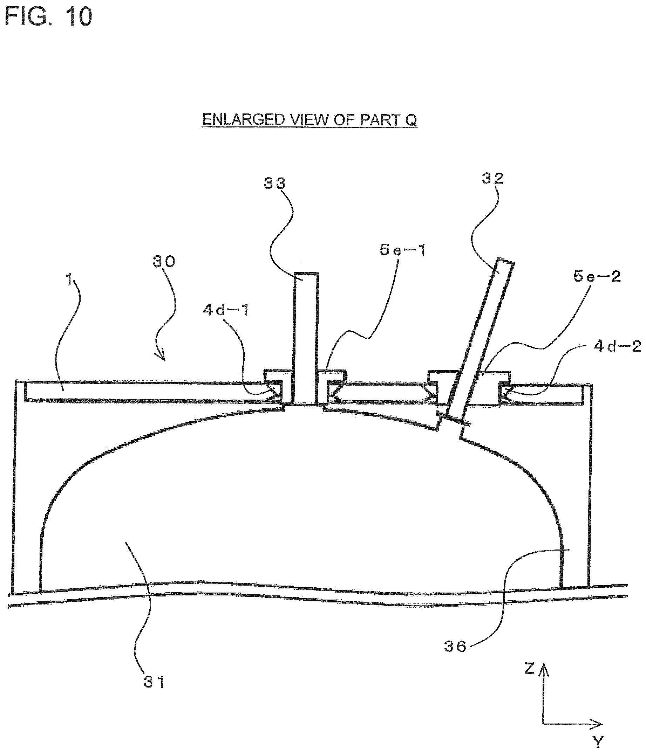

FIG. 9 is a longitudinal cross-sectional view illustrating a hot water storage tank according to Embodiment 5 of the present invention. FIG. 10 is an enlarged view of part Q in FIG. 9.

The hot water storage tank 30 according to Embodiment 5 comprises the tank 31 storing heated water therein; and a thermal insulation material that covers the outer circumferential part of the tank 31 and that thermally insulates the tank 31 from the ambient air. In addition, the tank 31 and the thermal insulation material may further be covered by an exterior case.

The outer circumferential part of the tank 31 is covered by the thermal insulation member described below, to thermally insulate the tank 31 from the ambient air.

The surface of the upper part of the tank 31 is covered by the first foamed thermal insulation material 36 shaped by using foamed resin (e.g., foamed polystyrene). The first foamed thermal insulation material 36 has a penetrating hole formed therein through which the top pipe 32 and the hot water supply pipe 33 penetrate, to avoid interference between the first foamed thermal insulation material 36 and the top pipe 32 and the hot water supply pipe 33. Further, a recessed part is formed in a top face part of the first foamed thermal insulation material 36.

Further, in the recessed part, the vacuum thermal insulation material 1 described in any one of Embodiments 1 to 3 is provided. In this situation, the two pipes (the top pipe 32 and the hot water supply pipe 33) are provided in the installation area of the vacuum thermal insulation material 1. For this reason, the vacuum thermal insulation material 1 has the two exterior cover penetrating holes 4d (the first exterior cover penetrating hole 4d-1 and the second exterior cover penetrating hole 4d-2) formed therein, to avoid interference between these two pipes and the vacuum thermal insulation material 1. Further, the hot water supply pipe 33 penetrates through the first exterior cover penetrating hole 4d-1, whereas the top pipe 32 penetrates through the second exterior cover penetrating hole 4d-2.

In this situation, the exterior cover penetrating holes 4d are provided with lids 5e (a first lid 5e-1 and a second lid 5e-2) each formed by using a foamed thermal insulation material (e.g., foamed polystyrene). The lids 5e each have a substantially T-shaped cross section by comprising: a base part formed in the shape of a substantially circular column (the shape of the substantially circular column positioned in the +Y direction in FIG. 9); and a projection part being formed in the shape of a substantially circular column (the shape of the substantially circular column positioned in the -Y direction in FIG. 9) and having a smaller diameter than the diameter of the base part.

The first lid 5e-1 has a hole formed therein and having a diameter substantially equal to the outside diameter of the hot water supply pipe 33, whereas the second lid 5e-2 has a hole formed therein and having the same shape as that of the top pipe 32 to be in close contact with the top pipe 32 when being attached.

The outside diameter of the projection part of each of the lids 5e is arranged to be substantially equal to the diameter of the corresponding one of the exterior cover penetrating holes 4d. Although it is desirable to arrange each of the lids 5e to have a diameter that is equal to, and does not interfere with, the diameter of the corresponding one of the exterior cover penetrating holes 4d, there will be no problem when the diameter of each of the lids 5e is slightly smaller than the diameter of the corresponding one of the exterior cover penetrating holes 4d. The outside diameter of the base part of each of the lids 5e is formed to be larger than the diameter at the point where the tapering starts on the surface of the first tapered section 10 of the vacuum thermal insulation material 1.

In this situation, the heated water is stored in the tank 31, therefore, when the tank 31 and the ambient air are compared with each other, the tank 31 has a higher temperature. For this reason, the vacuum thermal insulation material 1 is arranged in a manner that the part of the exterior cover 4 positioned on the second tapered section 11 side faces the high temperature side.

By using this positioning configuration, it is possible to realize a positioning configuration of the vacuum thermal insulation material 1 having a high level of reliability.

Although the exterior cover penetrating holes 4d make it possible to avoid the interference with the hot water supply pipe 33 and the top pipe 32, forming the exterior cover penetrating holes 4d lowers, to no small extent, the thermal insulation capabilities for the tank 31 in the surroundings of the hot water supply pipe 33 and the top pipe 32. To cope with this situation, the exterior cover penetrating holes 4d are provided with the lids 5e in Embodiment 5.

Further, each of the lids 5e comprises the projection part having the shape corresponding to the relevant one of the exterior cover penetrating holes 4d and the base part that abuts against the first tapered section 10 and that closes the relevant one of the exterior cover penetrating holes 4d. With this configuration, in Embodiment 5, by reducing the gaps between the ambient and the tank 31 formed by the exterior cover penetrating holes 4d, it is possible to suppress the convection occurring on the surfaces of the hot water supply pipe 33 and the top pipe 32 of the tank 31. It is therefore possible to inhibit leakage of the heat.

The surface of the lateral part of the tank 31 is covered by the second foamed thermal insulation material 37 shaped by using foamed resin (e.g., foamed polystyrene). Further, the surface of the lower part of the tank 31 is covered by the third foamed thermal insulation material 38 shaped by using formed resin (e.g., foamed polystyrene). The third foamed thermal insulation material 38 has a penetrating hole formed therein through which the bottom pipe 34 and the unheated water supply pipe 35 penetrate, to avoid interference between the third foamed thermal insulation material 38 and the bottom pipe 34 and the unheated water supply pipe 35.

In Embodiment 5, the lateral part and the lower part of the tank 31 are thermally insulated only by the foamed thermal insulation materials; however, needless to say, it is also acceptable to provide vacuum thermal insulation materials for the lateral part and the lower part of the tank 31. In that situation, when there is an interfering object such as a pipe in the installation area of any of the vacuum thermal insulation materials, it is possible to improve the reliability of the vacuum thermal insulation materials by using the vacuum thermal insulation material 1 described in any of Embodiments 1 to 3.

Further, in Embodiment 5, the configuration is described in which the pipes are arranged to penetrate through the exterior cover penetrating holes 4d formed in the vacuum thermal insulation material 1; however, the pipes are merely examples of the interfering objects. For example, when interfering objects such as a wiring and a circuit terminal are present in an installation area of the vacuum thermal insulation material 1, it is possible to avoid the interference between these interfering objects and the vacuum thermal insulation material 1 by arranging these interfering objects to penetrate through the exterior cover penetrating holes 4d.

In this situation, by arranging the vacuum thermal insulation material 1 in a manner that the part of the exterior cover 4 positioned on the second tapered section 11 side faces the high temperature side, it is possible to realize a positioning configuration of the vacuum thermal insulation material 1 having a high level of reliability.

### List of Reference Signs

- 1: vacuum thermal insulation material
- 2: fiber sheet
- 2a (2a-1 to 2a-10): penetrating hole
- 3: core material
- 3a: core material penetrating hole
- 3b: surface
- 3c: surface
- 3d: imaginary plane
- 3e: imaginary plane
- 4: exterior cover
- 4a: thermal fusion part
- 4b: lateral edge part
- 4c: lateral edge part
- 4d: exterior cover penetrating hole
- 4d-1: first exterior cover penetrating hole
- 4d-2: second exterior cover penetrating hole
- 5e: lid
- 5e-1: first lid
- 5e-2: second lid
- 10: first tapered section
- 10a: tapered part
- 11: second tapered section
- 11a: tapered part
- 12: intersection part
- 20: thermally insulated object
- 30: hot water storage tank
- 31: tank
- 32: top pipe
- 33: hot water supply pipe
- 34: bottom pipe
- 35: unheated water supply pipe
- 36: first foamed thermal insulation material
- 37: second foamed thermal insulation material
- 38: third foamed thermal insulation material

## Claims

1. A vacuum thermal insulation material comprising:
- a core material (3) formed with a fibrous member and having a core material penetrating hole (3a) formed therein; and
- an exterior cover (4) having an exterior cover penetrating hole (4d) formed therein in a position corresponding to the core material penetrating hole (3a), the exterior cover (4) covering and hermetically sealing the core material (3) in a vacuum and a part of the exterior cover (4) positioned at an outer perimeter part of the core material (3) and an inner circumferential side of the core material penetrating hole (3a) being thermally fused,
- the core material penetrating hole (3a) having a first tapered section (10) formed on a side of one surface of the core material (3) and a second tapered section (11) formed on a side of an other surface of the core material (3),
- the first tapered section (10) and the second tapered section (11) being provided with an intersection part therebetween,
**characterised in that**:
the intersection part is positioned on the other surface side relative to a center part with respect to a thickness of the core material (3),
- the relation α > β being satisfied, wherein α represents an angle formed between the first tapered section (10) and an imaginary plane extended along the one surface from an outer circumferential part of the core material penetrating hole (3a) toward a center thereof, whereas β represents an angle formed between the second tapered section (11) and an imaginary plane extended along the other surface from the outer circumferential part of the core material penetrating hole (3a) toward the center thereof.

2. The vacuum thermal insulation material of claim 1,
further comprising
- a plurality of fiber sheets (2) formed of the fibrous member, the plurality of fiber sheets (2) each having a penetrating hole (2a) formed in a position corresponding to the core material penetrating hole (3a),
wherein each of the penetrating holes (2a) formed in at least part of corresponding one of the plurality of fiber sheets (2) are mutually different in size, and
wherein the core material (3) is structured by stacking the fiber sheets (2) in a manner that sizes of the penetrating holes (2a) decrease from the one surface side and the other surface side toward the intersection part.

3. The vacuum thermal insulation material of any one of claims 1 to 2, wherein the relation 0° < β < 30° is satisfied.

4. The vacuum thermal insulation material of any one of claims 1 to 3, wherein the relation 45° < α < 90° is satisfied.

5. The vacuum thermal insulation material of any one of claims 1 to 4, wherein an intersection part between the first tapered section (10) and the one surface and to an intersection part between the second tapered section (11) and the other surface are tapered or rounded.

6. A method for manufacturing the vacuum thermal insulation material of any one of claims 1 to 5,
the vacuum thermal insulation material comprising a plurality of fiber sheets (2) formed of the fibrous member, the plurality of fiber sheets (2) each having the penetrating hole (2a) formed in the position corresponding to the core material penetrating hole (3a),
the method comprising
- forming the core material (3) by stacking the fiber sheets (2) in a manner that sizes of the penetrating holes (2a) decrease from the one surface side and the other surface side toward the intersection part between the first tapered section (10) and the second tapered section (11).

7. An installation configuration comprising the vacuum thermal insulation material of any one of claims 1 to 5,
wherein the vacuum thermal insulation material is arranged in a manner that the other surface side is a side having a higher temperature than the one surface side.

8. A hot water storage tank comprising:
- a vacuum thermal insulation material (1) of any one of claims 1 to 5;
- a tank (31) storing heated water therein; and
- a pipe (32, 33) connected to the tank,
the vacuum thermal insulation material being arranged in a manner that the pipe (32, 33) penetrates through the exterior cover penetrating hole (4d) and that the other surface faces the tank (31).

## Patentansprüche

1. Ein Vakuumwärmedämmungsmaterial, welches Folgendes umfasst:
- ein Kernmaterial (3), welches mit einem Faserelement gebildet ist und ein darin ausgestaltetes, durch das Kernmaterial gehendes Loch (3a) aufweist; und
- eine Außenabdeckung (4), welche ein durch die Außenabdeckung gehendes Loch (4d) aufweist, das darin in einer Position ausgestaltet ist, die dem durch das Kernmaterial gehenden Loch (3a) entspricht, wobei die Außenabdeckung (4) das Kernmaterial (3) in einem Vakuum abdeckt und hermetisch versiegelt, und ein Teil der Außenabdeckung (4), welcher an einem Teil des Außenumfangs des Kernmaterials (3) positioniert ist, mit einer Innenumfangsseite des durch das Kernmaterial gehenden Lochs (3a) thermisch zusammengefügt ist,
- das durch das Kernmaterial gehende Loch (3a) einen ersten verjüngten Teil (10) aufweist, welcher auf einer Seite einer Oberfläche des Kernmaterials (3) ausgestaltet ist, und einen zweiten verjüngten Teil (11), welcher auf einer Seite einer anderen Oberfläche des Kernmaterials (3) ausgestaltet ist,
- zwischen dem ersten verjüngten Teil (10) und dem zweiten verjüngten Teil (11) ein Schnittstellenteil vorgesehen ist,
**dadurch gekennzeichnet, dass**:
das Schnittstellenteil auf der anderen Oberflächenseite im Verhältnis zu einem Mittelteil in Bezug auf eine Dicke des Kernmaterials (3) positioniert ist,
- das Verhältnis α > β erfüllt ist, wobei α einen Winkel darstellt, der zwischen dem ersten verjüngten Teil (10) und einer imaginären Fläche, welche sich entlang der einen Oberfläche von einem Außenumfangsteil des durch das Kernmaterial gehenden Lochs (3a) hin zu einem Mittelpunkt davon erstreckt, gebildet wird, während β einen Winkel darstellt, der zwischen dem zweiten verjüngten Teil (11) und einer imaginären Fläche, welche sich entlang der anderen Oberfläche von einem Außenumfangsteil des durch das Kernmaterial gehenden Lochs (3a) hin zum Mittelpunkt davon erstreckt.

2. Das Vakuumwärmedämmungsmaterial gemäß Anspruch 1,
welches darüber hinaus Folgendes umfasst:
- eine Vielzahl von Faserplatten (2), welche aus dem Faserelement gebildet sind, wobei die Vielzahl von Faserplatten (2) jeweils ein durchgehendes Loch (2a) aufweisen, welches in einer Position ausgestaltet ist, die dem durch das Kernmaterial gehenden Loch (2a) entspricht,
wobei jedes der durchgehenden Löcher (2a), welche zumindest in einem Teil der Vielzahl der Faserplatten (2) ausgestaltet sind, sich im Hinblick auf ihre Größe voneinander unterscheiden, und
wobei das Kernmaterial (3) so aufgebaut ist, dass die Faserplatten (2) in einer Weise geschichtet sind, dass die Größen der durchgehenden Löcher (2a) von der einen Oberflächenseite und der anderen Oberflächenseite hin zum Schnittstellenteil abnehmen.

3. Das Vakuumwärmedämmungsmaterial gemäß einem der Ansprüche 1 bis 2, wobei das Verhältnis 0° < β < 30° erfüllt ist.

4. Das Vakuumwärmedämmungsmaterial gemäß einem der Ansprüche 1 bis 3, wobei das Verhältnis 45° < α < 90° erfüllt ist.

5. Das Vakuumwärmedämmungsmaterial gemäß einem der Ansprüche 1 bis 4, wobei ein Schnittstellenteil zwischen dem ersten verjüngten Abschnitt (10) und der einen Oberfläche und ein Schnittstellenteil zwischen dem zweiten verjüngten Abschnitt (11) der anderen Oberfläche verjüngt oder abgerundet sind.

6. Eine Methode zur Herstellung des Vakuumwärmedämmungsmaterials gemäß einem der Ansprüche 1 bis 5,
das Vakuumwärmedämmungsmaterial, welches eine Vielzahl von aus dem Faserelement gebildeten Faserplatten (2) umfasst, wobei die Vielzahl der Faserplatten (2) jeweils ein durchgehendes Loch (2a) aufweist, welches in der Position ausgestaltet ist, die dem durch das Kernmaterial gehenden Loch (3a) entspricht,
wobei die Methode Folgendes umfasst:
- die Ausgestaltung des Kernmaterials (3) durch Schichtung der Faserplatten (3) in einer Weise, dass die Größen der durchgehenden Löcher (2a) von der einen Oberflächenseite und der anderen Oberflächenseite hin zum Schnittstellenteil zwischen dem ersten verjüngten Abschnitt (10) und dem zweiten verjüngten Abschnitt (11) abnehmen.

7. Eine Installationskonfiguration, welche ein Vakuumwärmedämmungsmaterial gemäß einem der Ansprüche 1 bis 5 umfasst,
wobei das Vakuumwärmedämmungsmaterial in einer Weise angeordnet ist, dass die andere Oberflächenseite eine Seite ist, die eine höhere Temperatur als die eine Oberflächenseite aufweist.

8. Einen Heißwasserspeichertank, welcher Folgendes umfasst:
- ein Vakuumwärmedämmungsmaterial (1) gemäß einem der Ansprüche 1 bis 5;
- einen Tank (31), welcher darin geheiztes Wasser speichert; und
- ein Rohr (32, 33), welches mit dem Tank verbunden ist,
wobei das Vakuumwärmedämmungsmaterial in einer Weise angeordnet ist, dass das Rohr (32, 33) durch das durch die Außenabdeckung gehende Loch (4d) hindurchgeht, und die andere Oberfläche dem Tank (31) gegenüberliegt.

## Revendications

1. Matériau d'isolation thermique sous vide comprenant:
- un matériau de coeur (3) formé avec un élément fibreux et ayant un trou de pénétration (3a) formé dans le matériau de coeur; et
- une couverture extérieure (4) ayant un trou de pénétration (4d) formé dans la couverture extérieure dans une position correspondant au trou de pénétration (3a) dans le matériau de coeur, la couverture extérieure (4) couvrant et scellant hermétiquement le matériau de coeur (3) dans un vide et une partie de la couverture extérieure (4) positionnée au niveau d'une partie périmétrique extérieure du matériau de coeur (3) et d'un côté circonférentiel intérieur du trou de pénétration (3a) dans le matériau de coeur étant amenée en fusion par voie thermique;
- le trou de pénétration (3a) dans le matériau de coeur ayant une première section effilée (10) formée sur un côté d'une surface du matériau de coeur (3) et une seconde section effilée (11) formée sur un côté d'une autre surface du matériau de coeur (3),
- la première section effilée (10) et la seconde section effilée (11) étant dotées d'une partie d'intersection entre elles,
**caractérisé en ce que**:
- la partie d'intersection est positionnée sur l'autre côté de surface par rapport à une partie centrale à l'égard d'une épaisseur du matériau de coeur (3),
- la relation α > β est satisfaite, dans laquelle α représente un angle formé entre la première section effilée (10) et un plan imaginaire qui s'étend le long de la première surface depuis une partie circonférentielle extérieure du trou de pénétration (3a) dans le matériau de coeur en direction d'un centre de celui-ci, tandis que β représente un angle formé entre la seconde section effilée (11) et un plan imaginaire qui s'étend le long de l'autre surface depuis la partie circonférentielle extérieure du trou de pénétration (3a) dans le matériau de coeur en direction du centre de celui-ci.

2. Matériau d'isolation thermique sous vide selon la revendication 1,
comprenant en outre:
- une pluralité de feuilles en fibres (2) formées de l'élément fibreux, la pluralité de feuilles en fibres (2) ayant chacune un trou de pénétration (2a) formé dans une position correspondant au trou de pénétration (3a) dans le matériau de coeur,
dans lequel chacun des trous de pénétration (2a) formés dans au moins une partie d'une feuille correspondante de la pluralité de feuilles en fibres (2) sont mutuellement différents quant à leur taille, et
dans lequel le matériau de coeur (3) est structuré en empilant les feuilles en fibres (2) d'une manière telle que les tailles des trous de pénétration (2a) diminuent depuis le côté de la première surface et le côté de l'autre surface en direction de la partie d'intersection.

3. Matériau d'isolation thermique sous vide selon l'une quelconque des revendications 1 et 2,
dans lequel la relation 0° < β < 30° est satisfaite.

4. Matériau d'isolation thermique sous vide selon l'une quelconque des revendications 1 à 3,
dans lequel la relation 45° < α < 90° est satisfaite.

5. Matériau d'isolation thermique sous vide selon l'une quelconque des revendications 1 à 4,
dans lequel une partie d'intersection entre la première section effilée (10) et la première surface et une partie d'intersection entre la seconde section effilée (11) et l'autre surface sont effilées ou arrondies.

6. Procédé pour fabriquer le matériau d'isolation thermique sous vide selon l'une quelconque des revendications 1 à 5,
le matériau d'isolation thermique sous vide comprenant une pluralité de feuilles en fibres (2) formées de l'élément fibreux, la pluralité de feuilles en fibres (2) ayant chacune le trou de pénétration (2a) formé dans la position correspondant au trou de pénétration (3a) dans le matériau de coeur,
le procédé comprenant les étapes consistant à:
- former le matériau de coeur (3) en empilant les feuilles en fibres (2) d'une manière telle que les tailles des trous de pénétration (2a) diminuent depuis le côté de la première surface et le côté de l'autre surface en direction de la partie d'intersection entre la première section effilée (10) et la seconde section effilée (11).

7. Configuration d'installation comprenant le matériau d'isolation thermique sous vide selon l'une quelconque des revendications 1 à 5,
dans laquelle le matériau d'isolation thermique sous vide est agencé d'une manière telle que le côté de l'autre surface est un côté ayant une température plus élevée que le côté de la première surface.

8. Réservoir de stockage d'eau chaude comprenant:
- un matériau d'isolation thermique sous vide (1) selon l'une quelconque des revendications 1 à 5;
- un réservoir (31) qui stocke de l'eau chaude à l'intérieur; et
- un tube (32, 33) connecté au réservoir,
le matériau d'isolation thermique sous vide étant agencé d'une manière telle que le tube (32, 33) pénètre à travers le trou de pénétration (4d) dans la couverture extérieure, et que l'autre surface fait face vers le réservoir (31).
